(19) Europäisches Patentamt
European Patent Office
Office européen des brevets

(11) Publication number: 0 333 345 B1

# (12) EUROPEAN PATENT SPECIFICATION

(45) Date of publication of patent specification: 18.12.91 Bulletin 91/51

(51) Int. Cl.$^5$: B25J 9/18

(21) Application number: 89302062.8

(22) Date of filing: 01.03.89

## (54) A method of positioning an object under force feedback control.

(30) Priority: 15.03.88 JP 59574/88

(43) Date of publication of application: 20.09.89 Bulletin 89/38

(45) Publication of the grant of the patent: 18.12.91 Bulletin 91/51

(84) Designated Contracting States: DE FR GB IT

(56) References cited:
EP-A- 0 129 245
1987 IEEE INTERNATIONAL CONFERENCE ON ROBOTICS AND AUTOMATION PROCEEDINGS vol. 2, April 1987, RALEIGH, NORTH CAROLINA, U.S.A. pages 1025 - 1032; H. KAZEROONI: "AUTOMATED ROBOTING DEBURRING USING ELECTRONIC COMPLIANCY; IMPEDANCE CONTROL"

(56) References cited:
1985 IEEE INTERNATIONAL CONFERENCE ON ROBOTICS AND AUTOMATION PROCEEDINGS March 1985, ST. LOUIS, MISSOURI, U.S.A. pages 251 - 259; asada & WEST: "A METHOD FOR THE DESIGN OF HYBRID POSITION/FORCE CONTROLLERS FOR MANIPULATORS CONSTRAINED BY CONTACT WITH THE ENVIRONMENT"
ELEKTROTECHNIK. vol. 69, no. 5, 18 March 1987, WURZBURG DE pages 16 - 28; H. TOLLE: "DIE ROBOTER HAND BEKOMMT GEFÜHL"

(73) Proprietor: International Business Machines Corporation
Old Orchard Road
Armonk, N.Y. 10504 (US)

(72) Inventor: Ishikawa, Hiroshi
25-2 Takaishigami
Ichikawa-shi Chiba-ken (JP)
Inventor: Sawāda, Chihiro
101 goh Puchihouse Nagasaki 2-26-8 Seta
Setagaya-ku Tokyo-to (JP)

(74) Representative: Atchley, Martin John Waldegrave
IBM United Kingdom Limited Intellectual Property Department Hursley Park
Winchester Hampshire SO21 2JN (GB)

EP 0 333 345 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of positioning an object under force feedback control, i.e. a method for compliance control.

When work such as assembly is performed by using a manipulator, it is necessary to adjust the force or stiffness of the hand by some means. In other words, because only position control is performed, a conventional, industrial manipulator simply has high position rigidity and operates by ignoring the reaction of the object to be handled, so that, if it is required to perform assembly work such as insertion, it cannot adapt its movements to the shape of the work object. In addition, if there is a large deviation in the position, the work object may be damaged. Normally, a spring or similar object is mounted on the hand as a buffer in case such bodies contact each other, to adjust the stiffness of the hand. Compliance control is a method used to perform the adjustment of the stiffness of the hand for matching with the external environment, not by a mechanism such as the spring, but by controlling the manipulator as if the hand had a spring.

The balance of force in a dynamic system involves not only force from the stiffness of a spring, but also those emanating from sources such as a damper, inertia, and a force source. It is necessary to take these parameters into consideration for matching with the external environment. Here, the compliance for matching with the external environment is represented by a second-order equation of motion as shown in Figure 2 and the equation (1). Generally, translation and rotation of the motion are separately processed for each coordinate axis of the Cartesian coordinate system for which compliance is considered. That is,

$$M(\ddot{p} - \ddot{p}_r) + K_d(\dot{p} - \dot{p}_r) + K_s(p - p_r) = K_f(f_r - f) \quad (1)$$

$$C\,{}^cM\,C^T(\ddot{p} - \ddot{p}_r) + C\,{}^cK_d\,C^T(\dot{p} - \dot{p}_r) + C\,{}^cK_s\,C^T(p - p_r) = C\,{}^cK_f\,C^T(f_r - f)$$

$p_r$ : Desired value of hand position (6 vector)
$p$ : Hand position (6 vector)
$f_r$ : Desired value of force applied on hand (6 vector)
$f$ : Force applied on hand
$M$ : Imaginary mass · inertia in the world coordinate system (6 × 6 matrix)
$K_d$ : Damping coefficient in the world coordinate system (6 × 6 matrix)
$K_s$ : Spring coefficient in the world coordinate system (6 × 6 matrix)
$K_f$ : Compliance selection matrix in the world coordinate system (6 × 6 matrix)
$C$ : Compliance coordinate system
${}^cM$ : Imaginary mass·inertia in the compliance coordinate system (6 × 6 diagonal matrix)
${}^cK_d$ : Damping coefficient in the compliance coordinate system (6 × 6 diagonal matrix)
${}^cK_s$ : Spring coefficient in the compliance coordinate system (6 × 6 diagonal matrix)
${}^cK_f$ : Compliance selection matrix in the compliance coordinate system (6 × 6 diagonal matrix of which diagonal element is 1 or 0)

Here, the compliance selection matrix (${}^cK_f$) means a switch for selecting whether force should be considered (1) or not (0) in the compliance coordinate. If it is considered for each axis, it is the same kind of suspension as that found in cars and many other products. In other words, the purpose of the compliance control may be said, as shown in Figure 2, to control the manipulator as if the hand had a suspension mechanism consisting of a spring, a damper, an imaginary mass and a force source, and furthermore to control the manipulator so as to satisfy the equation of motion (1).

The conventional compliance control simplifies this equation, and its mainstream only treats either a spring or a damper.

In addition, the following publication describes a technique that performs compliance control by detecting external force with a force sensor for velocity control of a manipulator.

"Force Feedback Control of Robot Arm" by Kouichiro Sugimoto, Journal of the Society of Instrument and Control Engineers, Vol. 25, No. 1, January, 1986.

According to the publication, the equation of motion (1) in the world coordinate system including values of the detected force is integrated to obtain a velocity, which is converted into a velocity in the joint coordinate system by Jacobian, to then perform ordinary velocity control. When the equation (1) is simplified by assuming $K_f$ to be a unit matrix, and the goal values of velocity, acceleration and force ($\dot{p}_r$, $\ddot{p}_r$, $f_r$) to be 0,

$$M\ddot{p} = -K_d\dot{p} + K_s(p_r - p) - \quad (2)$$

The following equation is obtained by multiplying both sides of the equation by an inverse matrix of M and then by performing integration.

$$\dot{p} = M^{-1} \int \{-K_d\dot{p} + K_s (p_r - p) - f\} dt \quad (3)$$

When it is represented in a form of difference :

$$\dot{p}_n = TM^{-1} \{K_s (p_r - p) - f\} + (I - TM^{-1}K_d)\, \dot{p}_{n-1} \quad (4)$$

wherein, T : sampling time

When this velocity ($\dot{p}_n$) is converted to that in the joint coordinate system by the Jacobian matrix, the goal angular velocity of the joint ($\dot{q}_n$) is obtained.

$$\begin{aligned} \dot{q}_n &= J^{-1}\dot{p}_n \\ &= J^{-1} [TM^{-1} \{K_s(p_r - p) - f\} + (I - TM^{-1}K_d)\, \dot{p}_{n-1}] \end{aligned} \quad (5)$$

Namely, any compliance of second degree is realised by velocity control of the manipulator with the joint angular velocity ($\dot{q}_n$) that is obtained by substituting fedback position (p) and force (f) in the equation (5).

However, this approach still has a problem. The control method may become unstable when subjected to friction. Now, the stability of position is studied. Figure 3 shows a block diagram of this control technique. It should be noted here that the feedback of the position returns to the step where the trajectory is generated. When terms relating to the position feedback are extracted from the equation (3), the following equation is obtained.

$$\dot{p}_{rc} = M^{-1}K_s \int (p_r - p)\, dt \quad (6)$$

The velocity in the world coordinate system shall be represented as $p_{rc}$ to avoid confusion with the feedback value p. The goal angular velocity of the joint $q_{rc}$ is obtained by converting this $p_{rc}$ for the joint coordinate system.

$$\dot{q}_{rc} = J(q)^{-1}M^{-1}K_s \int (p_r - p)\, dt \quad (7)$$

Assuming the velocity feedback gain to be K as shown in Figure 3, torque to be applied to the joint is as follows.

$$\begin{aligned} \tau &= K\dot{q}_{rc} \\ &= KJ(q)^{-1}M^{-1}K_s \int (p_r - p)\, dt \end{aligned} \quad (8)$$

Alternatively, assuming the position feedback $K_2$ to be

$$K_2 = KJ(q)^{-1}M^{-1}K_s \quad (9)$$

then

$$t = K_2 \int (p_r - p)\, dt \quad (10)$$

Thus, for the position feedback, integral control is provided.

Generally, an industrial manipulator has higher friction because of some mechanism such as reduction gears. Suppose the static friction at the joint to be $\tau_{fs}$, the dynamic friction to be $\tau_{fd}$. Now, it is assumed that the position p slightly deviates from its goal value $p_r$. In this case, the joint initially stops because of the static friction, but the right side of the equation (10) is time integrated, becomes larger as time elapses, and consequently becomes equal to the static friction torque $\tau_{fs}$ at a time $t_l$. That is,

$$\tau_{fs} = \tau = K_2(p_r - p)t_l \quad (11)$$

Thereafter, the joint torque becomes larger than the static friction, and the joint starts to move. The friction during operation or the dynamic friction torque $\tau_{fd}$ is smaller than the static friction torque $\tau_{fs}$, so that the joint overshoots the goal value $p_r$, and gets out of position to the opposite side. Then, when torque in the opposite direction increases and exceeds the static friction as time passes, the joint starts to move in the opposite direction. Under this control, such operation continues indefinitely. Figure 4 shows this operation. Such operation notably occurs when the position gain $K_2$ is small. Conversely speaking, it is sufficient to increase the position gain $K_2$ in order to reduce the repeating cycle of the operation and the amplitude of the position deviation. In ordinary integral control, the position gain $K_2$ is increased to a degree not causing oscillation. In other words, it is not so desirable to change significantly the feedback gain in consideration of controllability.

Let us now review, the purpose of the compliance control, which is flexibly to set the spring (stiffness) and the damper (damping) of the hand in its operation. According to the control technique, the stiffness of the spring is varied by changing the spring constant $K_s$ in the equation (3). This means to vary the position gain $K_2$ in the equation (9). For example, it will be assumed that it is intended to set a weak spring. If the spring constant $K_s$ is made smaller, this necessarily makes the position gain $K_2$ smaller, and the above-mentioned oscillation becomes unavoidable. Referring to the equation (9), another factor to vary the position gain $K_2$ involves a matrix to convert values from the world coordinate system to the joint coordinate system, that is, the inverse Jacobian matrix $J(q)^{-1}$. This matrix is a function of angle of the joint, and its value varies significantly from 0 to infinity depending upon the configuration of the manipulator. Therefore, the value of position gain $K_2$ also varies significantly, so that the rigidity that was set for one configuration sometimes cannot be set for another configuration. This is due to the fact that the stiffness of the spring in the compliance control varies as the position gain $K_2$ is changed.

To overcome these shortcomings, consideration must be given to separating the generation of a trajectory that satisfies specified compliance from feedback gain.

The invention provides a method of positioning an object under force feedback control, comprising generating in accordance with specified parameters for compliance and values for balance of compliance a first definition defining a path of movement of the object in a world coordinate system, transforming said first definition into a second definition defining a path of movement of the object in a coordinate system specific to the object, generating a velocity profile and an acceleration profile for the object from said second definition, and positioning the object by causing it to move along the path defined in said second definition in accordance with said velocity profile and said acceleration profile.

The invention enables the compliance of an industrial manipulator that has a high position rigidity as a result of using a servo to be controlled. Preferably, it does this by integrating the equation of motion (1) to obtain a position displaced by a detected external force, calculating the trajectory of a position in a joint coordinate system with inverse kinematics, differentiating it to obtain the trajectories of velocity and acceleration, and performing position control with these trajectories. This allows the compliance to be specified in any desired Cartesian coordinate system in a form of second-order perturbation including not only stiffness but also damping. In addition, the specified compliance can be exactly realised by distinctively separating the specification of compliance from the feedback gain.

How the invention can be carried out will now be described by way of example, with reference to the accompanying drawings, in which :

Figures 1A and 1B are block diagrams illustrating a compliance control method embodying the invention;
Figure 2 is a diagram representing compliance of the hand of the manipulator ;
Figure 3 is a block diagram illustrating a conventional compliance control method ;
Figure 4 is a diagram for describing state of oscillation found in the conventional compliance control ; and
Figures 5A through 5E are diagrams illustrating an insertion operation of a plug into an edge connector by using a control method embodying the invention.

Figure 1 shows an overview of a control method. Figure 1A reflects equations (12) – (16), which are described later, as they are. Also, Figure 1B shows a case where, for the comparison with Figure 3, $K_f$ of the parameters in Figure 1A is assumed to be a unit matrix, goal values of velocity and force ($\dot{p}_r$ and $f_r$) to be 0. The present control method can be considered in the following three stages.

(1) Generation of compliance trajectory

The second-order equation of compliance (1) comprising specified goal values of position ($p_r$), velocity ($\dot{p}_r$) and force ($f_r$) in a world coordinate system, feedback value (f) from a sensor and imaginary mass · inertia (M), a damping coefficient ($K_d$), a spring coefficient ($K_s$), and a compliance selection matrix ($K_f$), the position (p) is rewritten to a compliance trajectory ($p_{rc}$). The equation is integrated twice to obtain a trajectory of position ($p_{rc}$)

that satisfies the equation. Namely,

$$p_{rc} = \iint M^{-1}\{K_d\,(\dot{p}_r - \dot{p}_{rc} + K_s(p_r - p_{rc}) + K_f(f_r - f)\}dtdt + p_r \quad (12)$$

(2) Coordinate transformation, and generation of compliance trajectory in a joint coordinate system

A trajectory of angle ($q_{rc}$) in a joint coordinate system is obtained from this trajectory of position ($p_{rc}$) in the world coordinate system by solving the inverse kinematic equations. In addition, this trajectory of angle ($q_{rc}$) is differentiated to obtain trajectories of angular velocity and angular acceleration ($\dot{q}_{rc}$, $\ddot{q}_{rc}$).

$$q_{rc} = IK(p_{rc}) \quad (13)$$

IK( ) : inverse kinematics

$$\dot{q}_{rc} = dq_{rc}/dt \quad (14)$$

$$\ddot{q}_{rc} = d\dot{q}_{rc}/dt \quad (15)$$

(3) Position control

Position control is performed so that the joint is caused to follow the generated compliance trajectory in the joint coordinate system.

$$\tau = K_0\ddot{q}_{rc} + K_1(\dot{q}_{rc} - \dot{q}) + K_2(q_{rc} - q)$$

| | |
|---|---|
| $q$ : | Fed-back angle of joint |
| $\dot{q}$ : | Fed-back angular velocity of joint |
| $\tau$ : | Torque to be applied to joint |
| $K_0, K_1, K_2$ : | Feedback gain |

According to this method, the parameters of compliance ($M$, $K_d$, $K_s$, $K_f$) are distinctively separated from the feedback gains ($K_0$, $K_1$, $K_2$) so that the parameters of compliance, particularly stiffness of a spring ($K_s$), can be flexibly set. That is, in the control method of the present invention, when the stiffness of the spring being set is realised, trajectories are obtained from the equations (12) through (15), and then the position control is performed on the basis of the equation (16), so that, in principle, the stiffness of the spring $K_s$ for the compliance control is entirely different from the position feedback $K_2$. Therefore, the present method has no relation with the oscillation observed in the technique of the above-mentioned publication. Similarly, the controllability is not damaged by the configuration attitude because the position feedback does not involve the inverse Jacobian matrix $J(q)^{-1}$.

Now, referring to Figures 5A through 5E, work for inserting a plug 52 into a connector 51 by using the present control method is discussed. It is assumed that accuracy of positions where the connector 51 and the plug 52 are placed is poor to save cost for the ambient environment. As shown in Figure 5A, a manipulator 53 is a six-axis one in which force sensor 54 for six directions is mounted on its hand. The work starts with bringing the plug 52 to the connector 51, and properly aligning them for insertion. First, the plug 52 is brought to a rough position by position control (Figure 5B). Then, it is moved bit by bit with spring being slightly hard in all directions to search for the position of the connector 51 from the state of force sensed at that moment (Figure 5C). When the position is substantially located, the plug 52 is inserted with the spring hard in the direction of the insertion, and soft in the other directions (Figure 5D). Now, the limit of position for this insertion operation is not known, but the operation is continued as long as it can be performed. This is a very ordinary operation if a man performs it. When the insertion is substantially completed, it is pushed by a force with its desired value increased in the insertion direction. Then, when a force larger than a predetermined value is detected, it is determined that the insertion is completed, and the operation is terminated (Figure 5E). The parameter for damping is set at a value not to cause oscillation of the system.

These processes cannot be performed by a commercially available manipulator that can attain only position control. In addition, it is difficult to cause an industrial manipulator under conventional compliance control that has significant limitation for compliance that can be set due to its technique to attain such delicate control of

force.

Application of the present invention enables compliance control at a relatively low speed using an industrial manipulator with high positional rigidity given by servo, because it reduces compliance control to position control and then performs joint-angle control. It makes it possible to perform assembly work that requires delicate control of force because the parameters of second-order equations of compliance, particularly the stiffness of a spring ($K_s$), can be flexibly set in comparison with the conventional method.

## Claims

1. A method of positioning an object under force feedback control, comprising generating in accordance with specified parameters for compliance and values for balance of compliance a first definition defining a path of movement of the object in a world coordinate system, transforming said first definition into a second definition defining a path of movement of the object in a coordinate system specific to the object, generating a velocity profile and an acceleration profile for the object from said second definition, and positioning the object by causing it to move along the path defined in said second definition in accordance with said velocity profile and said acceleration profile.

2. A method for compliance control in a system wherein the positioning of an object is controlled in response to detection of a force exerted upon the object, characterised by generating a position trajectory for the object in a world coordinate system by solving a second-order equation of motion which includes specified parameters for compliance, values for the balance of compliance, and the detected force exerted upon the object, transforming the position trajectory of the object in the world coordinate system into a position trajectory of the object in a coordinate system specific to the object ; generating a velocity trajectory and an acceleration trajectory of the object in the specific coordinate system from the position trajectory of the object in the specific coordinate system ; and performing position control of the object so that it follows the aforementioned position, velocity and acceleration trajectories in the specific coordinate system.

3. A method as claimed in claim 1 or claim 2, wherein the object is a robot, and the coordinate system specific to the object is a joint coordinate system.

4. A method as claimed in any preceding claim, wherein the specified parameters for compliance are stiffness, damping and mass · inertia.

5. A method as claimed in any preceding claim, wherein goals of position, velocity, acceleration and force of the object are specified as values for balance of compliance.

6. A method as claimed in any preceding claim, wherein the parameters for compliance and the values for balance of compliance are specified for each coordinate axis.

7. A method as claimed in any preceding claim, wherein the parameters for compliance and values for balance of compliance are specified for each step of a series of steps to complete the performance of an operation.

## Revendications

1. Procédé pour positionner un objet sous un réglage à réaction d'une force appliquée, comprenant la génération, en conformité avec des paramètres spécifiés pour la suspension et des valeurs pour la force de suspension résultante, une première définition qui définit un trajet de mouvement de l'objet dans un système de coordonnées universelles, la transformation de cette première définition en une seconde définition qui définit un trajet de mouvement de l'objet dans un système le coordonnées spécifique à l'objet, la génération d'un profil de vitesse et d'un profil d'accélération pour l'objet à partir de la seconde définition, ainsi que le positionnement de l'objet en produisant son mouvement le long du trajet défini par la seconde définition et en conformité avec le profil de vitesse et le profil d'accélération.

2. Procédé pour le réglage de suspension dans un système dans lequel le positionnement d'un objet est réglé en réponse à la détection d'une force exercée sur l'objet, caractérisé par la génération d'une trajectoire de position pour l'objet dans un système de coordonnées universelles par la solution d'une équation de mouvement du second ordre, qui comporte des paramètres spécifiés pour la suspension, des valeurs pour la force de suspension résultante et la force détectée exercée sur l'objet, la transformation de la trajectoire de position de l'objet dans le système de coordonnées universelles en une trajectoire de position de l'objet dans un système de coordonnées spécifique à l'objet ; la génération d'une trajectoire de vitesse et d'une trajectoire d'accélération de l'objet dans le système de coordonnées spécifique à partir de la trajectoire de position de l'objet dans le système de coordonnées spécifique ; et le réglage de la position de l'objet de manière que celui-ci suive les

trajectoires précitées de position, vitesse et accélération dans le système de coordonnées spécifique.

3. Procédé selon la revendication 1 ou 2, dans lequel l'objet est un robot et le système de coordonnées spécifique à l'objet est un système de coordonnées d'un joint.

4. Procédé selon l'une quelconque des revendications précédentes, dans lequel les paramètres spécifiés pour la suspension sont la raideur, l'amortissement et l'inertie massique.

5. Procédé selon l'une quelconque des revendications précédentes, dans lequel les valeurs cibles pour la position, la vitesse, l'accélération et la force appliquée à l'objet sont spécifiées comme des valeurs déterminant la force de suspension résultante.

6. Procédé selon l'une quelconque des revendications précédentes, dans lequel les paramètres pour la suspension et les valeurs déterminant la force de suspension résultante sont spécifiés pour chaque axe de coordonnées.

7. Procédé selon l'une quelconque des revendications précédentes, dans lequel les paramètres pour la suspension et déterminant la force de suspension résultante sont spécifiés pour chaque étape d'une série d'étapes nécessaires à l'exécution d'une opération.

**Patentansprüche**

1. Verfahren zum Positionieren eines Objektes unter Verwendung einer Steuerung mit Kraftrückkopplung welches aufweist : gemäß festgesetzter Parameter für die Nachgiebigkeit und Werten für das Nachgiebigkeitsgleichgewicht das Erzeugen einer ersten Definition, welche eine Bewegungsbahn des Objektes in einem Weltkoordinatensystem definiert, Transformieren dieser ersten Definition in eine zweite Definition, welche eine Bewegungsbahn des Objektes in einem objektspezifischen Koordinatensystem definiert, Erzeugen eines Geschwindigkeitsprofils und eines Beschleunigungsprofils für das Objekt aus dieser zweiten Definition, und Positionieren des Objektes, in dem man seine Bewegung längs der in der zweiten Definition definierten Bahn gemäß dem Geschwindigkeitsprofil und dem Beschleunigungsprofil bewirkt.

2. Verfahren zur Nachgiebigkeitssteuerung in einem System, in welchem das Positionieren eines Objektes in Abhängigkeit von dem Feststellen einer auf das Objekt ausgeübten Kraft gesteuert wird, gekennzeichnet durch das Erzeugen einer Positionstrajektorie für das Objekt in einem Weltkoordinatensystem durch Lösen einer Bewegungsgleichung zweiter Ordnung, die festgesetzte Parameter für die Nachgiebigkeit, Werte für das Nachgiebigkeitsgleichgewicht sowie die festgestellte auf das Objekt ausgeübte Kraft enthält, Transformieren der Positionstrajektorie des Objektes im Weltkoordinatensystem in eine Positionstrajektorie des Objektes in einem objektspezifischen Koordinatensystem, Erzeugen einer Geschwindigkeitstrajektorie und einer Beschleunigungstrajektorie des Objektes in dem spezifischen Koordinatensystem aus der Positionstrajektorie des Objekts in dem spezifischen Koordinatensystem, und Ausführen der Positionssteuerung des Objektes so, daß es den vorgenannten Positions-, Geschwindigkeits- und Beschleunigungstrajektorien in dem spezifischen Koordinatensystem folgt.

3. Verfahren nach Anspruch 1 oder 2, bei welchem das Objekt ein Roboter und das objektspezifische Koordinatensystem ein Gelenkkoordinatensystem ist.

4. Verfahren nach irgendeinem der vorgehenden Ansprüche, bei welchem die festgelegten Parameter für die Nachgiebigkeit Steifheit, Dämpfung und Massenträgheit sind.

5. Verfahren nach irgendeinem der vorgehenden Ansprüche, bei welchem Zielpositionen, Geschwindigkeit, Beschleunigung und Kraft des Objektes als Werte für das Nachgiebigkeitsgleichgewicht festgelegt sind.

6. Verfahren nach irgendeinem der vorgehenden Ansprüche, bei welchem die Parameter für die Nachgiebigkeit und die Werte für das Nachgiebigkeitsgleichgewicht für jede Koordinatenachse festgelegt sind.

7. Verfahren nach irgendeinem der vorgehenden Ansprüche, bei welchem die Parameter für die Nachgiebigkeit und Werte für das Nachgiebigkeitsgleichgewicht für jeden Schritt einer Serie von Schritten zur Vollendung der Durchführung eines Arbeitsvorganges festgelegt sind.

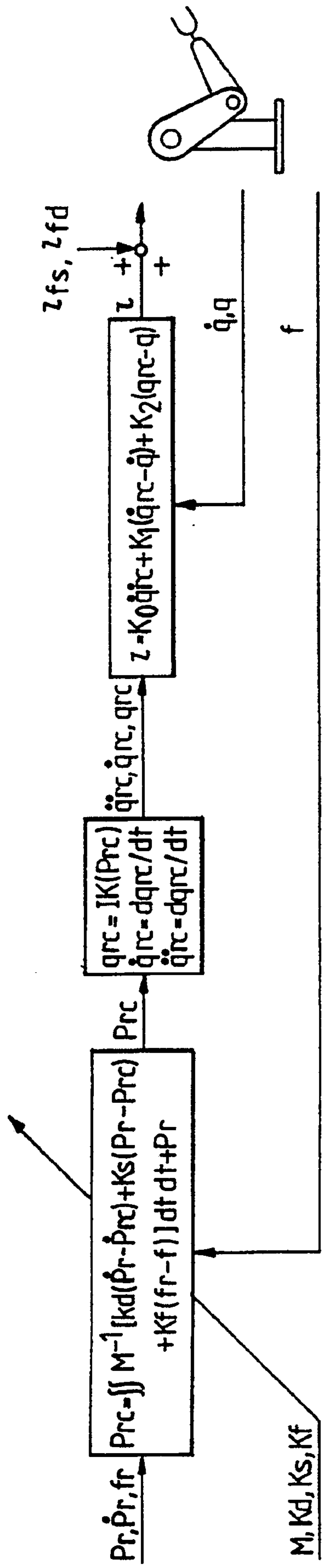
Pr, Ṗr, fr
M, Kd, Ks, Kf
Prc=∫∫ M⁻¹ [Kd(Ṗr−Ṗrc)+Ks(Pr−Prc) +Kf(fr−f)] dt dt+Pr
Prc
qrc = IK(Prc)
q̇rc= dqrc/dt
q̈rc=dq̇rc/dt
q̈rc, q̇rc, qrc
τ =K0 q̈rc+K1(q̇rc−q̇)+K2(qrc−q)
τ
+
+
τfs, τfd
q̇, q
f

FIG. 1A

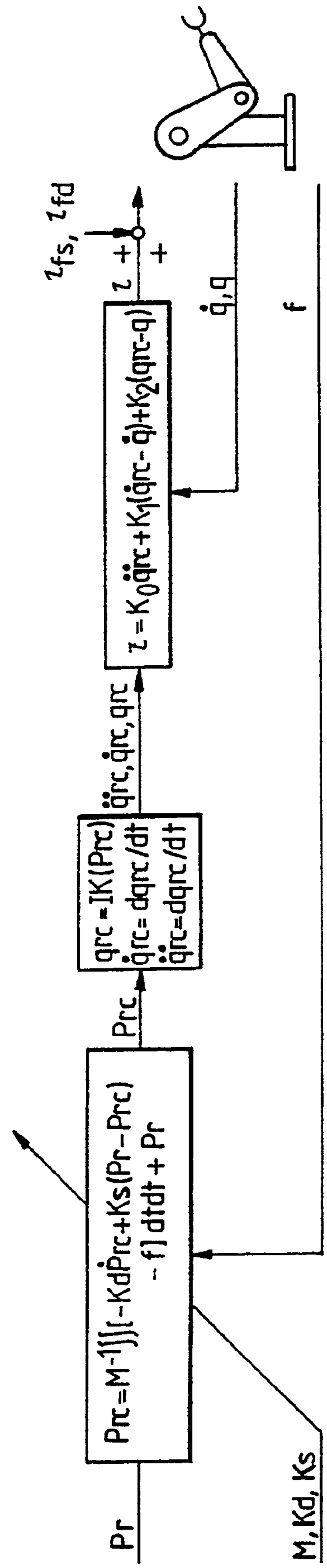
Pr
M, Kd, Ks
Prc=M⁻¹∫∫[−KdṖrc+Ks(Pr−Prc) −f] dtdt + Pr
Prc
qrc = IK(Prc)
q̇rc= dqrc/dt
q̈rc=dq̇rc/dt
q̈rc, q̇rc, qrc
τ = K0 q̈rc+K1(q̇rc−q̇)+K2(qrc−q)
τ
+
+
τfs, τfd
q̇, q
f

FIG. 1B

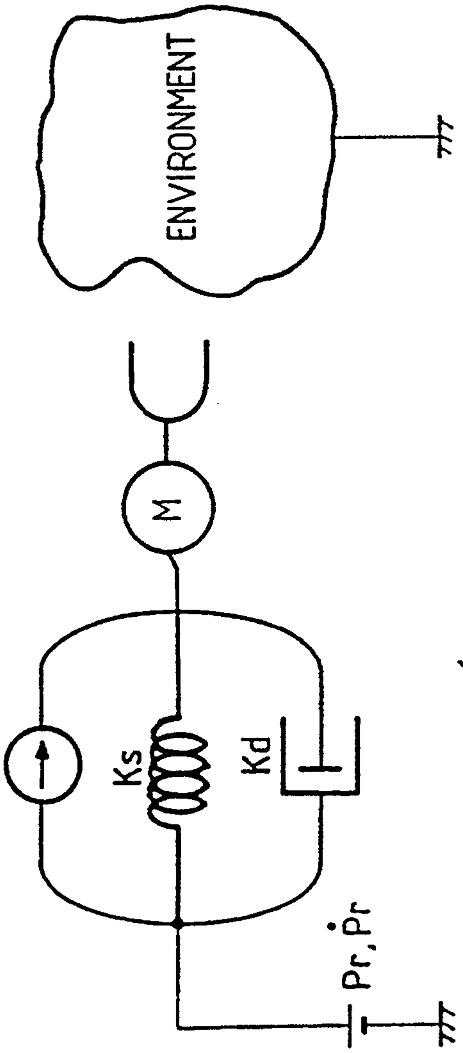
ENVIRONMENT
M
Ks
Kd
Pr, Ṗr

FIG. 2

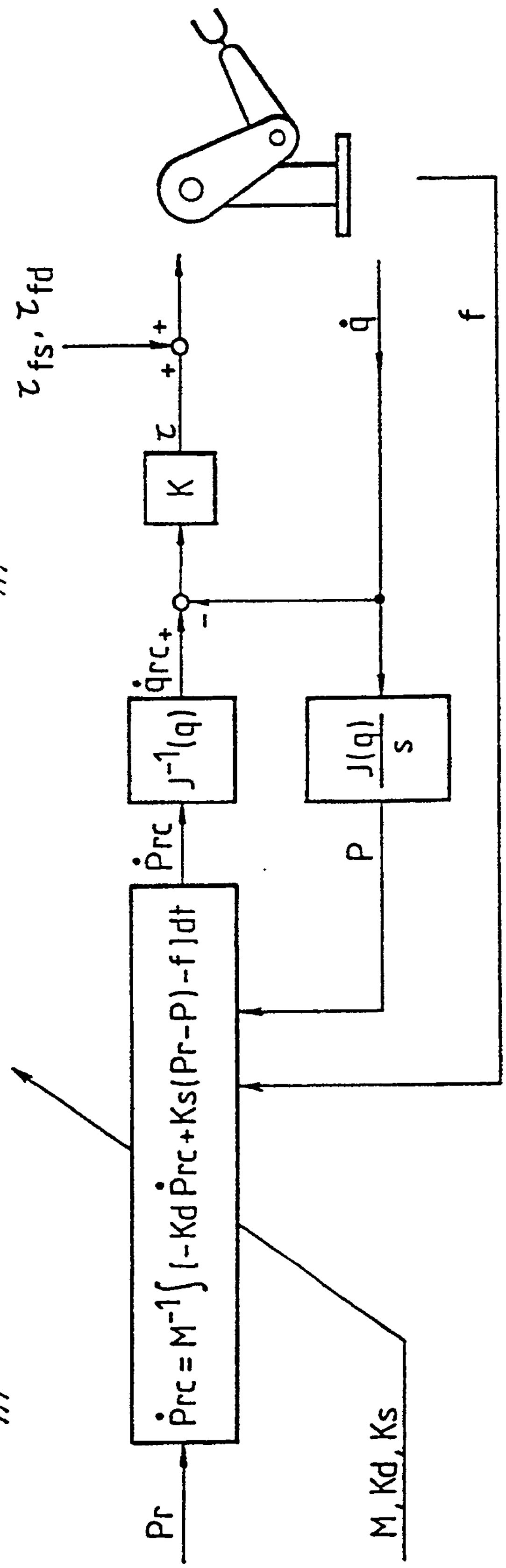
Pr
Ṗrc = M⁻¹∫[−Kd Ṗrc + Ks(Pr − P) − f]dt
M, Kd, Ks
Ṗrc
J⁻¹(q)
q̇rc
K
τ
τfs, τfd
J(q)/s
P
q̇
f

FIG. 3

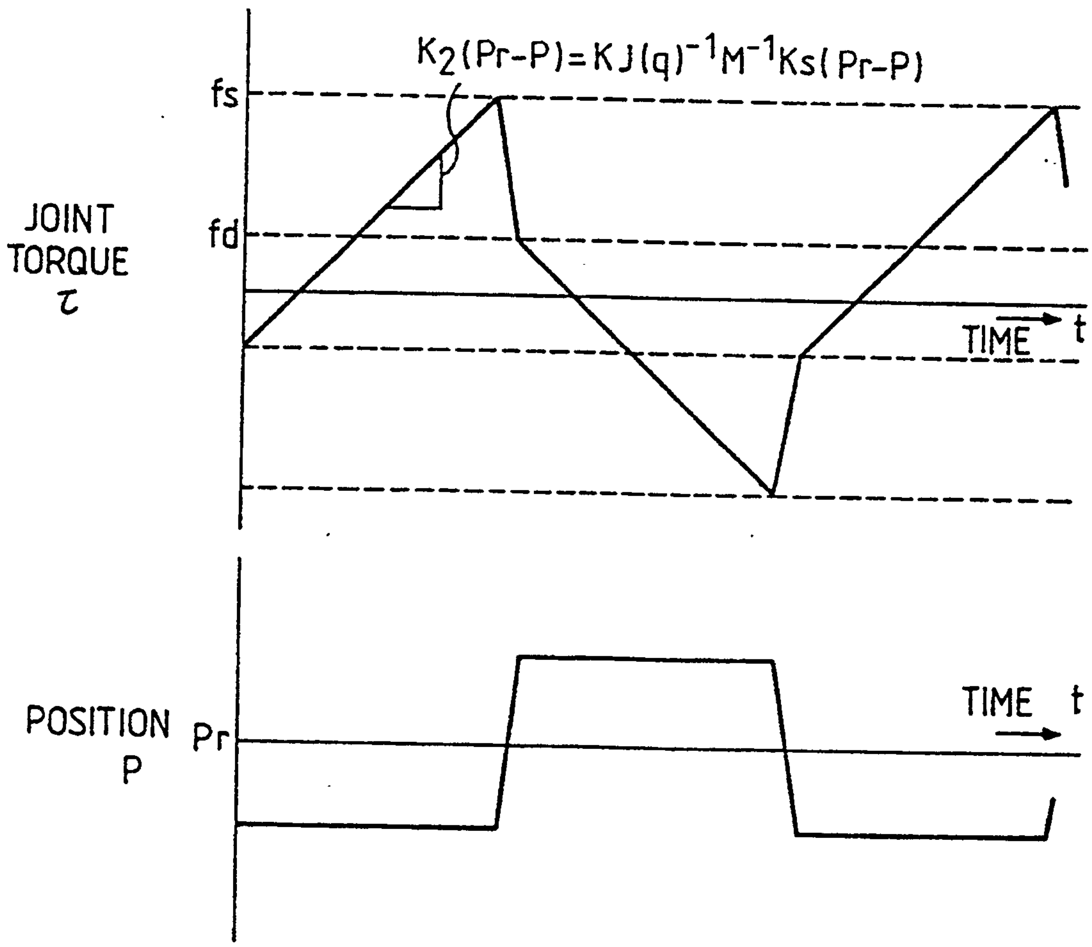
K2(Pr-P)=KJ(q)-1M-1Ks(Pr-P)
fs
fd
JOINT
TORQUE
τ
TIME t
POSITION
P
Pr
TIME t

FIG. 4

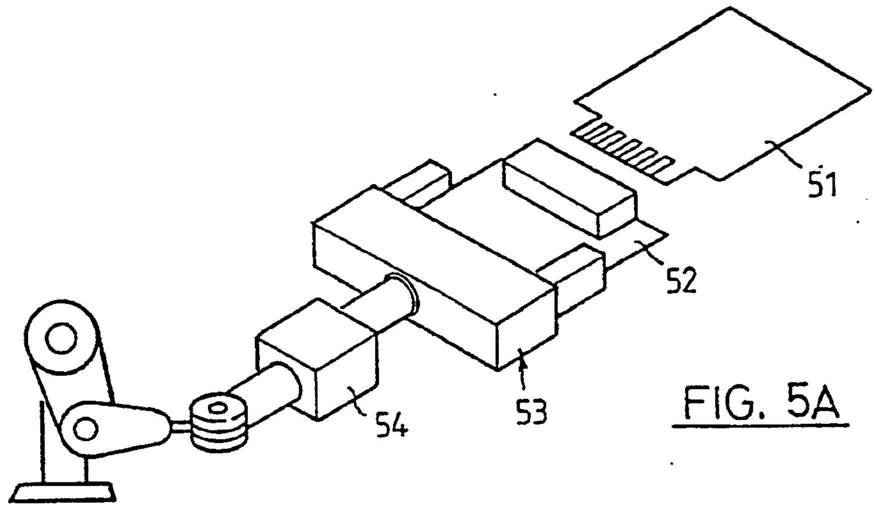


FIG. 5A

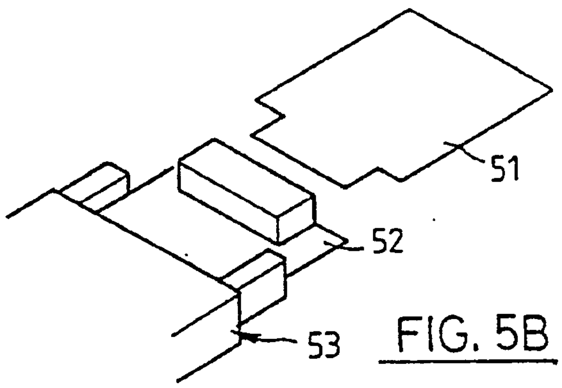


FIG. 5B

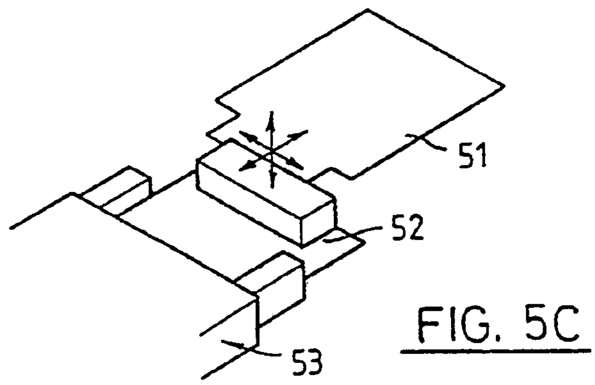


FIG. 5C

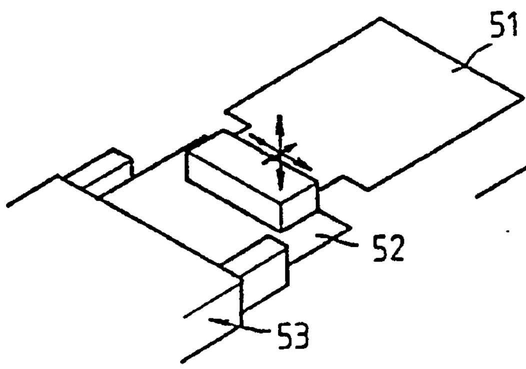


FIG. 5D

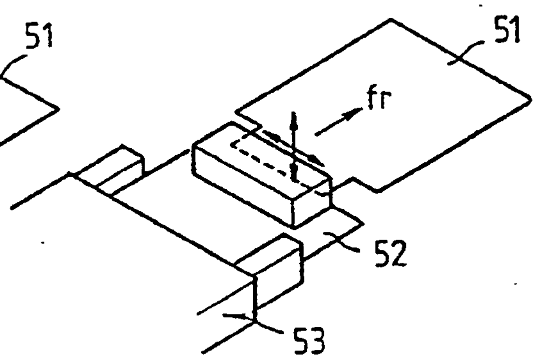


FIG. 5E